# NEUE EUROPÄISCHE PATENTSCHRIFT

(11) **EP 2 800 898 B2**
(45) Veröffentlichungstag und Bekanntmachung des Hinweises auf die Entscheidung über den Einspruch: **02.04.2025**
(45) Hinweis auf die Patenterteilung: 11.12.2019
(21) Anmeldenummer: 13702373.5
(22) Anmeldetag: 21.01.2013
(51) Int. Cl.: F03D 1/06, F03D 13/10, H02K 3/28, H02K 7/18, F03D 1/00

(54) **BLATTMONTAGEVERFAHREN FÜR EINEN WINDKRAFTGENERATOR**
BLADE FITTING METHOD FOR A WIND POWER GENERATOR
PROCÉDÉ DE MONTAGE DE PALE D'UN GÉNÉRATEUR D'ÉOLIENNE

(30) Priorität: 07.02.2012 DE 102012201762
(43) Veröffentlichungstag der Anmeldung: 12.11.2014
(73) Patentinhaber: Flender GmbH, 46395 Bocholt (DE)
(72) Erfinder: BRACH, Karsten, 13589 Berlin (DE); JUNGE, Martin, 94481 Grafenau (DE)
(74) Vertreter: Michalski Hüttermann & Partner Patentanwälte mbB
(86) Internationale Anmeldenummer: PCT/EP2013/051000
(87) Internationale Veröffentlichungsnummer: WO 2013/117411

(56) Entgegenhaltungen:
- EP-A1- 2 677 168
- AT-B- 408 497
- DE-A1- 102007 049 368
- US-A1- 2011 241 630

## Beschreibung

Die vorliegende Erfindung betrifft ein Verfahren zum Montieren oder Demontieren eines Blattes an einen/von einem Windkraftgenerator, der eine Wicklung aufweist, welche einer Phase eines zu erzeugenden Stroms zugeordnet ist. Unter einem "Blatt" wird hier ein Flügel bzw. ein Rotorblatt einer Windkraftanlage verstanden.

Bei der Montage von Windkraftanlagen können die in der Regel drei Flügel entweder komplett (einschließlich Nabe) oder einzeln montiert werden. Die Einzelblattmontage macht es notwendig, dass in Zwischenschritten die Nabe mit erst einem oder zwei angebauten Flügeln in eine bestimmte Lage gedreht werden muss. Dies erfordert ein relativ großes Drehmoment, für dessen Aufbringung der Generator verwendet werden kann. Hierfür ist er im motorischen Betrieb einzusetzen. Dazu muss der speisende Umrichter einen Strom sehr kleiner Frequenz liefern, da die Vorschubgeschwindigkeit sehr klein ist.

Marktübliche Umrichter (z.B. sogenannte Puls-U-Umrichter) haben den Nachteil, dass bei sehr kleinen Frequenzen eine Stromreduktion auf z.B. 50 bis 70 Prozent gegenüber dem Bemessungspunkt erfolgen muss, da der Strom für derart kleine Frequenzen sonst für die Halbleiterbauelemente zu hoch wäre. In der Folge reicht das vom Generator abgebbare Drehmoment möglicherweise für die Drehung der Nabe nicht aus.

Bislang wurden für die Blattmontage häufig hydraulische Antriebe eingesetzt, die das notwendige Drehmoment aufbringen können. Es wurden für die Blattmontage aber auch elektrische Antriebe verwendet, wobei die Einschränkungen des Umrichters, also die Stromreduktion, in Kauf genommen wurde.

Die AT 408 497 B beschreibt eine Vorrichtung zur selbsttätigstromrichtungsabhängigen Serien-Parallelumschaltung der zwei an Pulsstromrichtern liegenden Teilwicklungssysteme einer Drehstrommaschine für ein Starter-Generatorsystem eines Kraftfahrzeugs. Die zwei Teilwicklungssysteme weisen dabei jeweils drei Teilwicklungen dreier Wicklungen, welchen jeweils eine Phase zugeordnet ist, auf. In einem motorischen Betrieb der Drehstrommaschine können die Teilwicklungssysteme in einer Serienschaltung betrieben werden und in einem generatorischen Betrieb können die Teilwicklungssysteme in einer Parallelschaltung betrieben werden.

Die DE 10 2007 049 368 A1 beschreibt ein Verfahren zur Errichtung einer Windkraftanlage, bei welchem die Nabe ohne Rotorblätter montiert wird, und jedes Rotorblatt in 6 Uhr Stellung mittels Seilzugtechnik montiert wird, wobei nach Anbau eines Rotorblattes der Generator mittels dem generatorseitigen Wechselrichter zur Montage weiterer Blätter als Motor betrieben wird.

Die Aufgabe der vorliegenden Erfindung besteht somit darin, den apparativen Aufwand für die Montage bzw. Demontage von Blättern einer Windkraftanlage zu verringem.

Diese Aufgabe wird gelöst durch ein Verfahren nach Anspruch 1.

Ein nicht beanspruchtes Ausführungsbeispiel betrifft einen Windkraftgenerator mit einer Wicklung, die einer Phase eines zu erzeugenden Stroms zugeordnet ist, wobei die Wicklung in ein erstes und ein zweites Wicklungsteil unterteilt ist, und eine Schalteinrichtung an die Wicklung angeschlossen ist, mit der das erste Wicklungsteil und das zweite Wicklungsteil in einem Betriebszustand zueinander parallel und in einem Blattmontagezustand miteinander in Serie schaltbar sind. Darüber hinaus weist der Windkraftgenerator einen Umrichter auf, von dem die Wicklung ansteuerbar ist. Dies bedeutet, dass der Umrichter bidirektional ausgelegt sein muss, da er im Generatorbetrieb den Strom von den Spulen aufnimmt, während er im motorischen Betrieb Strom für die Wicklung liefert, um die Nabe des Windkraftgenerators für die Blattmontage entsprechend weiter zu drehen. Weiterhin ist erfindungsgemäß von dem Umrichter für die Wicklung ein Strom mit einer Frequenz von unter 10 Hz und insbesondere unter 1 Hz lieferbar. Damit können die geringen Drehzahlen realisiert werden, die für die Blattmontage notwendig sind. Dabei wird unter einer Schalteinrichtung eine Einrichtung verstanden, bei der eine Parallelschaltung der Wicklungsteile in eine Serienschaltung manuell umklemmbar ist. Die Schalteinrichtung stellt einen Klemmenkasten dar.

Erfindungsgemäß wird bereitgestellt ein Verfahren zum Montieren oder Demontieren eines Blattes an einen/von einem Windkraftgenerator, der eine Wicklung aufweist, welche einer Phase eines zu erzeugenden Stroms zugeordnet ist, und eine Schalteinrichtung aufweist, welche als Klemmenkasten ausgebildet ist, wobei die Wicklung unterteilt in ein erstes und ein zweites Wicklungsteil bereitgestellt wird, das erste Wicklungsteil und das zweite Wicklungsteil von einem Betriebszustand, in dem sie zueinander parallel geschaltet sind, in einen Blattmontagezustand geschaltet werden, in dem sie miteinander in Serie geschaltet sind, indem eine Parallelschaltung der Wicklungsteile in eine Serienschaltung manuell umgeklemmt wird, der Windkraftgenerator in dem Blattmontagezustand der Wicklungsteile motorisch betrieben wird, und das Blatt an den Generator montiert oder von ihm demontiert wird. Weiterhin weist der Windkraftgenerator einen Umrichter auf, von dem die Wicklung ansteuerbar ist, wobei von dem Umrichter im Blattmontagezustand für die Wicklung ein Strom mit einer Frequenz von unter 10 HZ geliefert wird.

In erfindungsgemäßer Weise wird der Windkraftgenerator im Betriebszustand und im Blattmontagezustand also in zwei verschiedenen Modi betrieben. Dazu ist es notwendig, dass die Wicklung des Windkraftgenerators zumindest zweigeteilt ist. Während des generatorischen Betriebs, also in dem Betriebszustand, werden die Teile der Wicklung parallel geschaltet. Für den exemplarischen Fall von zwei gleichen Wicklungsteilen wird dadurch der Strom durch die Wicklungsteile halbiert gegenüber dem Fall, dass die Wicklungsteile in Serie geschaltet sind. Für die Blattmontage können die Wicklungsteile dann aber in Serie geschaltet werden, sodass der Strom dann ungeteilt durch beide Wicklungsteile fließt und dadurch ein hohes Drehmoment erzielt werden kann, da dieses proportional zum Produkt von Stromstärke und Wicklungszahl ist.

Gegebenenfalls ist das erste Wicklungsteil in mindestens ein drittes und viertes Wicklungsteil unterteilt, wobei das zweite sowie das mindestens dritte und vierte Wicklungsteil in dem Betriebszustand zueinander jeweils parallel und in dem Blattmontagezustand miteinander in Serie geschaltet sind. Dies bedeutet, dass die Wicklung nicht nur zwei, sondern auch mehr Wicklungsteile aufweisen kann. Im Betriebszustand sind dann all diese Teile einzeln zueinander parallel geschaltet, während sie für die Blattmontage paarweise, gruppenweise oder alle zusammen in Serie geschaltet werden können. Dabei müssen die einzelnen Wicklungsteile auch nicht alle gleich groß sein, vorzugsweise sind sie es aber.

Darüber hinaus kann der Windkraftgenerator für mindestens zwei Phasen ausgelegt sein, wobei für jede der Phasen jeweils eine Wicklung und eine Schalteinrichtung der genannten Art vorgesehen ist. Dies bedeutet, dass für jede Phase (z.B. drei Phasen oder sechs Phasen) jeweils eine separate Wicklung vorhanden ist. Jede dieser separaten Wicklungen ist dann wieder in zwei oder mehr Wicklungsteile unterteilt. Die Wicklungsteile können dann über entsprechende Schalteinrichtungen, die miteinander eine gemeinsame Schaltvorrichtung bilden, vorzugsweise synchron miteinander parallel oder in Reihe geschaltet werden.

Wie oben bereits angedeutet wurde, wird vorzugsweise eine Windkraftanlage mit einem derartigen Windkraftgenerator ausgestattet. Dabei ist an dem Windkraftgenerator drehbar eine Nabe montiert, an welcher wiederum radial die Blätter bzw. Flügel montiert sind/werden.

Die vorliegende Erfindung wird nun anhand der beigefügten Zeichnungen näher erläutert, in denen zeigen:
- FIG 1: eine Parallelschaltung von Wicklungsteilen für den Betrieb eines Windkraftgenerators und
- FIG 2: eine Serienschaltung von Wicklungsteilen für die Blattmontage des Windkraftgenerators.

Die nachfolgend näher geschilderten Ausführungsbeispiele stellen bevorzugte Ausführungsformen des erfindungsgemäßen Verfahrens der vorliegenden Erfindung dar.

Eine Windkraftanlageweist einen Rotor auf, der auf einem Turm drehbeweglich gelagert ist. Der Rotor treibt direkt oder indirekt über ein Getriebe einen Generator (hier Windkraftgenerator) an. Dieser produziert elektrische Energie, die in ein Netz eingespeist werden kann.

Der Rotor weist in der Regel drei Rotorblätter auf, aber es ist auch eine andere Anzahl an Rotorblättern möglich. Im Zentrum des Rotors befindet sich eine Nabe an der die Rotorblätter (hier auch als Blätter oder Flügel bezeichnet) befestigt werden.

Die Montage des Rotors erfolgt häufig an der Spitze des Turms der Windkraftanlage. Dabei wird ein Rotorblatt beispielsweise in horizontaler Lage an die Nabe angeschraubt. Wurde bereits eines oder mehrere Rotorblätter an der Nabe befestigt, so ist ein entsprechend hohes Drehmoment aufzubringen, um die Nabe in die gewünschte Lage zu drehen. Dazu wird der Windkraftgenerator mit einer sehr geringen Frequenz motorisch betrieben, um die Nabe langsam in die gewünschte Position zu drehen.

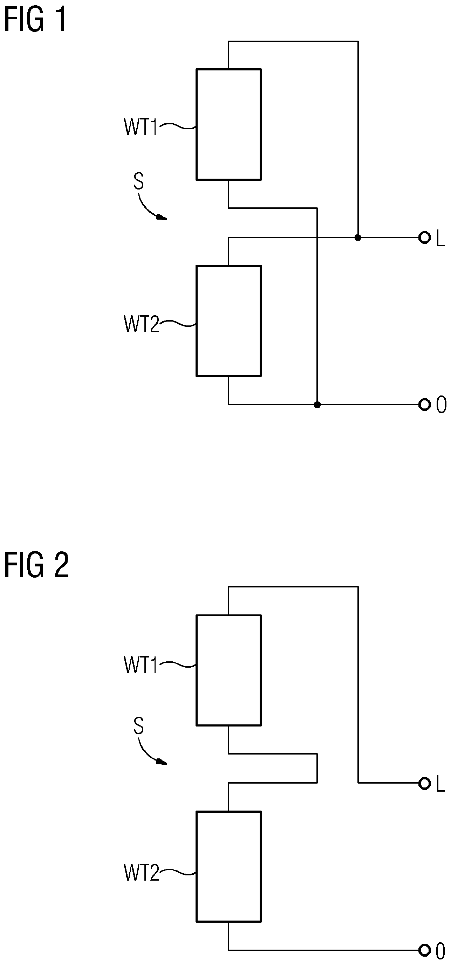

Der Generator besitzt eine Wicklung, von der in den FIG 1 und 2 ein Ausschnitt schematisch dargestellt ist. Ein Generator besitzt typischerweise ein dreiphasiges Ständerwicklungssystem. Von diesem dreiphasigen Wicklungssystem ist in den FIG 1 und 2 jeweils lediglich die Wicklung für eine einzige Phase dargestellt. Die Wicklung ist aufgeteilt in einem ersten Wicklungsteil WT1 und einen zweiten Wicklungsteil WT2. Die beiden Wicklungsteile WT1 und WT2 sind durch eine Schalteinrichtung S parallel geschaltet. Damit besitzt die dargestellte Wicklung für die eine Phase zwei parallele Wicklungszweige, nämlich einen mit dem Wicklungsteil WT1 und einen mit dem Wicklungsteil WT2. Die Wicklung besitzt die Anschlüsse L und 0. Die Schalteinrichtung S bzw. die Wicklungsteile WT1 und WT2 befinden sich in FIG 1 in einem Betriebszustand (Parallelschaltung). Dies bedeutet, dass die Wicklungsteile WT1 und WT2 während des üblichen Generatorbetriebs parallel geschaltet sind. Der Gesamtstrom der Wicklung teilt sich dabei auf den ersten Wicklungsteil WT1 und den zweiten Wicklungsteil WT2 auf.

Für die Blattmontage ist ein sehr hohes Drehmoment des motorisch betriebenen Generators notwendig. Das Drehmoment ist proportional zum Produkt von Strom und Windungszahl. Daher werden die beiden Wicklungsteile WT1 und WT2 für die Blattmontage gemäß FIG 2 in Serie geschaltet. Dies lässt sich durch ein Umschalten der Schalteinrichtung S erreichen. In dem in FIG 2 dargestellten Blattmontagezustand der Schalteinrichtung S bzw. der Wicklungsteile WT1 und WT2 sind diese also in Serie geschaltet. Daher fließt der gesamte Strom der Wicklung durch beide Wicklungsteile WT1 und WT2. Damit verdoppelt sich jedoch das Drehmoment gegenüber dem Fall der parallel geschalteten Wicklungsteile, wenn die Einprägung des gleichen Stroms vorausgesetzt wird.

Die Ständerwicklung des Generators wird mit einer Umschaltmöglichkeit (Schalteinrichtung) derart ausgeführt, dass für ein gegebenes Drehmoment ein geringerer Strom benötigt wird.

In dem Beispiel der FIG 1 und 2 ist dargelegt, dass die Wicklung für eine Phase zwei Zweige bzw. Wicklungsteile aufweist. Eine Wicklung kann aber auch mehr als zwei Wicklungsteile, nämlich drei, vier, fünf, sechs etc. Zweige bzw. Wicklungsteile aufweisen. Diese können dann durch eine entsprechend ausgebildete Schalteinrichtung im Betriebszustand alle parallel zueinander und im Blattmontagezustand in Serie miteinander geschaltet sein. Gegebenenfalls können einzelne Wicklungsteile der gesamten Wicklung paarweise oder gruppenweise von einer Parallelschaltung in eine Serienschaltung durch eine entsprechend ausgelegte Schalteinrichtung schaltbar sein. In einem konkreten Beispiel kann die Wicklung im Betriebszustand (Generatorbetrieb) vier Wicklungszweige aufweisen, während sie im Blattmontagezustand (d.h. motorischer Betrieb) nur zwei oder einen Wicklungszweig zwischen den Anschlüssen 0 und L aufweist.

Das gesamte Wicklungssystem eines mehrphasigen Windkraftgenerators besitzt dann für jede Phase jeweils eine Wicklung der oben dargestellten Art. Die Wicklungsteile werden synchron für alle Phasen parallel bzw. in Serie geschaltet

Erfindungsgemäß wird durch das Umschalten zwischen Serien- und Parallelschaltung das Problem der Stromreduktion umgangen. Damit steht das volle Bemessungsmoment oder, je nach Umschaltung, sogar ein höheres Moment zur Montage zur Verfügung.

## Patentansprüche

1. Verfahren zum Montieren oder Demontieren eines Blattes an einen/von einem Windkraftgenerator, der eine Wicklung aufweist, welche einer Phase eines zu erzeugenden Stroms zugeordnet ist, und eine Schalteinrichtung (S) aufweist, welche als Klemmenkasten ausgebildet ist,
**dadurch gekennzeichnet, dass**
- die Wicklung unterteilt in ein erstes (WT1) und ein zweites Wicklungsteil (WT2) bereitgestellt wird,
- das erste Wicklungsteil (WT1) und das zweite Wicklungsteil von einem Betriebszustand, in dem sie zueinander parallel geschaltet sind, in einen Blattmontagezustand geschaltet werden, in dem sie miteinander in Serie geschaltet sind, indem eine Parallelschaltung der Wicklungsteile (WT1, WT2) in eine Serienschaltung über die Schalteinrichtung (S) manuell umgeklemmt wird,
- der Windkraftgenerator in dem Blattmontagezustand der Wicklungsteile motorisch betrieben wird,
- das Blatt an den Generator montiert oder von ihm demontiert wird, und
- der Windkraftgenerator einen Umrichter aufweist, von dem die Wicklung ansteuerbar ist, wobei von dem Umrichter im Blattmontagezustand für die Wicklung ein Strom mit einer Frequenz von unter 10 Hz geliefert wird.

## Claims

1. Method for assembling or disassembling a blade on a/of a wind power generator, which has a winding which is assigned to one phase of a current to be produced, and has a switching facility (S), which is embodied as a terminal box, **characterised in that**
- the winding is made available divided into a first (WT1) and a second winding part (WT2),
- the first winding part (WT1) and the second winding part are switched from an operating state, in which they are connected in parallel to one another, into a blade fitting state, in which they are connected in series with one another, by a parallel circuit of the winding parts (WT1, WT2) being manually reconnected in a series circuit,
- the wind power generator in the blade fitting state of the winding parts is operated by motor,
- the blade is assembled on the generator or disassembled therefrom, and
- the wind power generator has a converter, by means of which the winding can be controlled, wherein a current with a frequency of below 10 Hz is supplied to the winding by the converter in the blade fitting state.

## Revendications

1. Procédé pour monter une pale sur un générateur d'éolienne ou pour la démonter d'un générateur d'éolienne, qui a un enroulement, lequel est associé à une phase d'un courant à produire, et un dispositif (S) de commutation, constitué sous la forme d'une boîte à borne,
**caractérisé en ce que**
- l'on se procure l'enroulement subdivisé en une première partie (WT1) et en une deuxième partie (WT2),
- on fait passer la première partie (WT1) de l'enroulement et la deuxième partie de l'enroulement d'un état de fonctionnement, dans lequel elles sont montées en parallèle l'une avec l'autre, dans un état de montage de pale, dans lequel elles sont montées en série l'une avec l'autre, en faisant passer manuellement un montage en parallèle des parties (WT1, WT2) de l'enroulement à un montage en série,
- on fait fonctionner en moteur le générateur d'éolienne dans l'état de montage de pale des parties de l'enroulement,
- on monte la pale sur le générateur ou on l'en démonte, et
- le générateur d'éolienne a un onduleur, par lequel l'enroulement peut être commandé, dans lequel il est fourni à l'enroulement un courant d'une fréquence inférieure à 10 Hz par l'onduleur dans l'état de montage de pale.
